# EUROPEAN PATENT APPLICATION

(11) **EP 4 296 527 A1**
(43) Date of publication of application: **27.12.2023**
(21) Application number: 22180712.6
(22) Date of filing: 23.06.2022
(51) Int. Cl.: F16C 19/02, F16C 27/04, F16C 27/06, F16C 35/04, F16C 35/067, F16C 35/077, F16C 33/12, F16C 25/08

(54) **HOUSING FOR BEARING**

(71) Applicant: Volvo Car Corporation, 40531 Göteborg (SE)
(72) Inventor: Ehn, Joakim, 461 98 Trollhättan (SE); Cederlund, Johan, 423 51 Torslanda (SE)
(74) Representative: Nederlandsch Octrooibureau

(57) **Abstract**

The present disclosure relates to a structure to minimize vibration and noise; and improve engine durability in a vehicle, specifically in the housing of the transmission system. The housing comprises a rotary shaft and at least one bearing seat that accommodates at least one bearing which surrounds the shaft and support its rotation. The present disclosure further relates to the bearing seat which is configured to maintain proper positioning and functioning of the at least one bearing when the shaft is provided with changes of axial load direction and magnitude, in turn minimizing noise and vibration in the shaft and transmission system.

## Description

### Technical Field

The present disclosure relates to a housing for a vehicle and a method for minimizing vibration and noise.

### Background Art

In vehicles, the transmission system transfers power from the drive motor to the drive shaft. The rotation of the drive shaft is supported by a plurality of bearings. Typically, the drive shaft and the bearings are subjected to changes of temperature and axial load depending on the driving mode, direction of the vehicle, and environmental conditions.

Bearings are regularly manufactured with an internal clearance, or eccentricity. In case of high-performance lubricated bearings, the internal clearance allows for thermal expansion of the bearing components and helps to establish stable hydrodynamic lubrication at high rotation speeds. In a vehicle, an additional clearance is used to account for thermal expansion of other parts connected to the bearing, for example, the shaft and housing. However, the bearing eccentricity and the additional clearance can cause creep and vibration in the transmission system, particularly under changes of axial load and temperature, which can decrease the life of the vehicle's engine.

A strategy to reduce noise and vibration is to configure a bearing seat that additionally receives a wave spring, also called wave washer. The wave spring reduces the internal clearance, ensuring proper contact among the bearing components and maintaining bearing functionality and longevity. However, when high axial loads are applied to the drive shaft and bearings in the direction of the wave washer, there is a high risk of damaging the wave washer (sometimes permanently), which could intensify noise and vibration in the vehicle and reduce the durability of the engine.

It is therefore an objective of the present disclosure to minimize the risk of damage to the wave washer during high axial loads, thereby minimizing noise and vibration in a vehicle and improving durability of the engine. The problem is at least partially solved or alleviated by the subject matter of the independent claims of the present disclosure, wherein further examples are incorporated in the dependent claims.

### Summary

According to a first aspect, there is provided a housing comprising at least one bearing seat. The at least one bearing seat comprises a first radial surface facing radially inward; a first axial surface connecting to the first radial surface perpendicularly; a second radial surface connecting to the first axial surface perpendicularly and extending parallel to the first radial surface and; a second axial surface connecting to the second radial surface perpendicularly and extending parallel to the first axial surface. Such a bearing seat for a housing can provide strong and stable means to maintain the positioning of bearings and to resist high axial loads from the shaft. The first axial surface can function as a stop in the event of high axial loads providing a solid and uniform surface that ensures the bearings and shaft to not be forced into a position where they, or other parts of the engine, could be damaged.

In an example of the present disclosure, the first axial surface and second axial surface may form a stepped protuberance in the housing. This configuration allows a bearing and a shaft to fit in the housing when the shaft extends towards a first direction from the bearing. The housing may be made of a metal and/or metal alloy, preferably aluminum.

In another example of the present disclosure, the second axial surface may be axially offset in a first direction about 2 - 6 mm, preferably about 4 mm, from the first axial surface and extends about 1 - 8 mm, preferably about 5 mm radially inwards. The configuration of the second axial surface forms a radial space between the bearing and the second axial surface that can be used to dispose an additional element to be in contact with the bearing face.

In some examples of the present disclosure, the bearing seat may be roughly equal in an axial direction, with half of the bearing seat providing a seat and space for a spacer or resilient member, and half of the bearing seat providing a support for stopping shifting at high loads.

According to a second aspect, there is provided a system comprising a rotary shaft, the housing described herein above, and a bearing disposed between the first radial surface of the bearing seat and the rotary shaft. The rotatory shaft is placed in the housing perpendicular to the first and second axial surface, and the bearing rotatably supports the rotatory shaft within the housing. Such a configuration ensures that the bearing and shaft are maintained in a proper position (and therefore continue to function properly) despite any axial loads on the system.

In an example of the present disclosure, the system further comprises a gap between the first axial surface and the bearing in a neutral position, e.g., a position of the bearing when no or low axial loads are applied. The gap can account for thermal expansion of the housing components, such that changes in temperature do not affect a normal smooth rotation of the shaft within the housing. The gap may be in the range between 1 and 8 mm. A specific size on the gap range can account for the thermal expansion of the housing components and secure the bearing within the bearing seat, and thus the gap range can depend on several factors, for example, the materials used and/or size of components.

In another example of the present disclosure, the rotary shaft may be able to shift in a first and/or a second direction due to axial load. Typically, these are slight shifts, but could be larger depending on the forces in the system. Depending on the driving mode and the direction of the vehicle, the drive shaft may be subjected to axial loads in a first direction or a second direction. For example, during forward driving, the drive shaft is provided with a high axial load in the first direction. Conversely, during backward driving or regenerative braking, the drive shaft is provided with an axial load on the second direction. Changes in load may also occur when switching from driving mode to coasting mode, in which the axial load is provided in a second direction during coasting. The axial loads provided to the shaft can reach 25kN in either the first or the second direction.

Furthermore, in an example of the present disclosure, the bearing may be tightly connected to the shaft such that the bearing shifts axially in either direction, for example, according to the axial shifting of the shaft. This ensures that the bearing supports the shaft rotation in the event the axial shifting of the shaft. The above discussed bearing seat can be used in the direction where wave springs are used, and high loads are to be expected to maintain a low clearance, protecting the integrity of the bearing, and resulting in an overall longer bearing life. If high loads are not to be expected, the bearing can use prior art spring arrangements.

In an example of the present disclosure, the bearing maybe able to shift axially in the first direction such that the bearing contacts the first axial surface to stop shifting of the bearing axially in the first direction. The first axial surface prevents the bearing to excessively shift towards a first direction, ensuring the bearing and the rotatory shaft to stay within the limits of the housing, and therefore ensuring that proper operation continues.

In an example of the present disclosure, a resilient member maybe axially disposed between the second axial surface and the bearing. The resilient member reduces the axial clearance within the bearing, which ensures maximal contact between the components of the bearing and optimizes the bearing functioning. Further in the example, the resilient member applies an axial pre-load on the bearing in a second direction. The axial pre-load on the bearing in a second direction minimizes the inner axial clearance of the bearing when changes of axial load occur during driving, this ensures a smooth rotation of the inner race of the bearing which reduces, for example, ball skidding, noise, and vibration. The resilient member may be a coil wave spring. A coil wave spring has the advantage to consistently apply an axial pre-load on the bearing and elastically tolerate deformation when the bearing shifts axially.

In an example of the present disclosure, the axial pre-load applied on the bearing maybe in the range of 100 to 800 Newtons, preferably in the range of 300 to 700 Newtons. A specific axial pre-load range depends on the inner axial clearance of the bearing and the gap between the first axial surface and the bearing. Thus, the axial pre-load differs with the type, materials and dimensions of the bearing and the housing components.

According to a third aspect, and in accordance with the system described herein above, there is provided a method for minimizing noise and vibration in a vehicle.

The method comprising:
- placing at least a bearing between a housing and a rotary shaft, the housing comprising at least one bearing seat that comprises a first radial surface facing radially inward; a first axial surface connecting to the first radial surface perpendicularly; a second radial surface connecting to the first axial surface perpendicularly and extending parallel to the first radial surface and; a second axial surface connecting to the second radial surface perpendicularly and extending parallel to the first axial surface, and
- stopping axial shifting of the bearing in a first direction with the first axial surface.

The first axial surface prevents the bearing to excessively shift towards a first direction, ensuring the bearing and the rotatory shaft to stay within the limits of the housing.

In an example of the present disclosure, the method further comprises placing a resilient member between the second axial surface and the bearing. The resilient member reduces the axial clearance within the bearing, which ensures maximal contact between the components of the bearing and optimizes the bearing functioning. Further in the example, the method further comprising applying an axial pre-load on the bearing in a second direction. The axial pre-load on the bearing in a second direction minimizes the inner axial clearance of the bearing when changes of axial load occur during driving, this ensures a smooth rotation of the inner race of the bearing which minimizes, for example, ball skidding, noise, and vibration.

### Brief Description of Drawings

Figure 1 illustrates a portion of the shaft and the housing in a vehicle.
Figure 2 illustrates a cross-section view of a portion of the shaft and the housing.
Figure 3a and 3b illustrate the cross-section view of a portion of the shaft and the housing according to an example, which shows the behavior of the housing components when loads are applied on the shaft on a first and a second direction, respectively.

### Description of Examples

The following is a description of certain examples of the present disclosure, given by way of example only and with reference to the Figures.

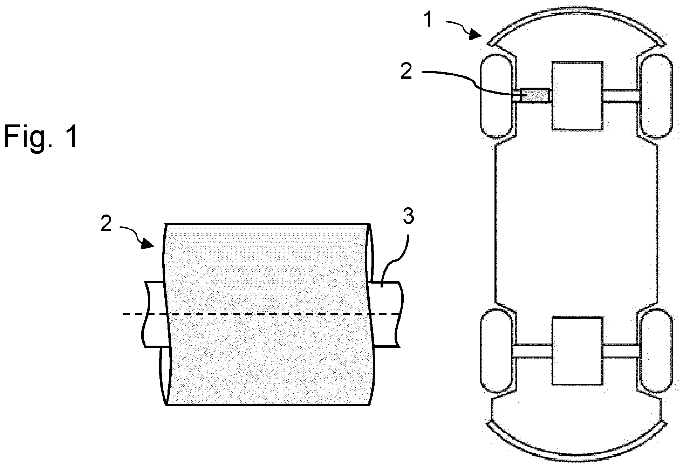

Figure 1 illustrates a portion the housing 2 and the rotatory shaft 3 installed in the vehicle 1. The housing 2 is an enclosed structure with an internal cylindrical shape that is secured to the vehicle chassis. The housing 2 encloses the rotatory shaft 3 and the at least one bearing 8 that supports the rotatory shaft 3 rotatably; and it can be formed of a metal like steel or aluminum, although other metals or metal alloys are possible. A transmission system transmits power from the drive motor of the vehicle to the rotatory shaft 3, which provides torque to drive the vehicle in a forward or backward direction.

The transmission and motor are enclosed in the same housing, and the application shown includes a motor with bearings on either side of the rotor shaft. The system typically includes a spline fitted input shaft with a first gear wheel for the transmission or a reduction gear. However, this disclosure relates to bearing seats that could be used with other systems, for example, any system with a bearing suspended shaft.

The direction of the axial load on a shaft can depend on the shaft 3 rotation direction, while the magnitude of the axial load can depend on the driving mode and conditions. For example, driving the car forwards would originate an axial load on the rotatory shaft 3 in a first direction. As the transmission system transmits a large amount of power to drive the vehicle, the axial loads acting on the rotatory shaft 3 can be quite high, up to 25kN in either a first or a second direction. Thus, the components of the housing 2 are required to withstand high loads and high operation speeds.

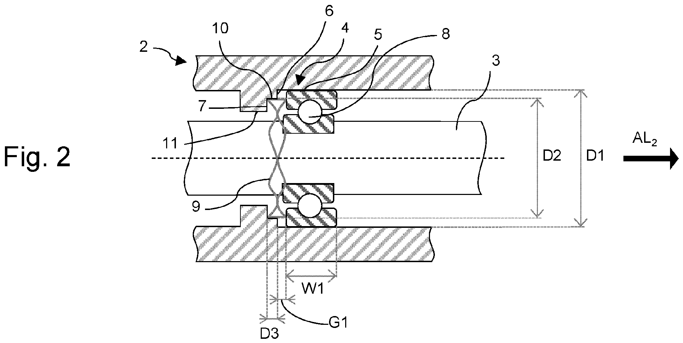

Figure 2 illustrates a cross-section view of a portion of the housing 2. The housing 2 is a structure that encloses a rotatory shaft 3, for example a drive shaft, in a vehicle 1 such as that shown in Figure 1. The inner part of the housing 2 is configured to contain at least one bearing seat 4. The at least one bearing seat 4 has a first radial surface 5 facing radially inward, which corresponds to a radial section of the inner surface of the housing 2. A first step from the first radial surface 5 forms a first axial surface 6 and a second radial surface 10, wherein the second radial surface 10 connects to the first axial surface 6 perpendicularly. A second step from the first radial surface 5, and adjacent to the first step, forms a second axial surface 7 and a third radial surface 11, wherein the third radial surface 11 connects to the second axial surface 7 perpendicularly. Typically, the entire housing 2 is formed integrally, though could be formed with the steps machined or otherwise formed in or connected to the vehicle 1 chassis.

The first axial surface 6 extends radially inwards from the first radial surface 5. The first axial surface 6 extends such that only a portion of the outer race of the bearing 8 can be in contact with the first axial surface 6 when axial loads push the bearing 8 in a first direction, toward axial surface 6. Thus, the specific length of first axial surface 6 may vary depending on the type and dimensions of the bearing 8. The length of the first axial surface 6 also allows the inner race of the bearing 8 to continue to rotate smoothly even when the outer race of bearing 8 is in contact with the first axial surface 6.

The second axial surface 7 is axially offset (D3) in a first direction between about 2 - 6 mm, preferably about 4 mm. The configuration of the second axial surface 7, forms a radial space between the bearing 8 and the second axial surface 7. Such a space can in some examples be used to dispose an additional element in contact with the outer race of the bearing 8, for example a spring. In some examples, the radial distance of the second radial surface 10 from the first radial surface 5 is equal to the distance of the third radial surface 11 from the second radial surface 10. This offers the bearing seat 4 with one half of the radial space to dispose a spacer or resilient member, and the other half to provide support for stopping shifting in the event of high loads.

The third radial surface 11 extends axially about 3 - 10 mm and is offset from rotary shaft 3 such that it does not obstruct the rotation of the rotary shaft 3. The length of third radial surface 11 provides a housing block with sufficient strength for the first and second axial surface 7 to counteract any high axial forces encountered during operation.

Such a bearing seat 4 for a housing 2 is a simple way to provide strong and stable means to maintain the positioning of a bearing 8 that is subjected to axial loads coming from the shaft 3. The first axial surface 6 can function as a hard stop in the event of high axial loads occurring in a first direction (AL₁), ensuring that bearings and shaft are not forced into a position where they, or other parts of the engine, could be damaged.

The rotatory shaft 3 is positioned within the housing 2 such that its axis of rotation is parallel to first radial surface 5 of the housing 2, and perpendicular to the first and second axial surfaces 6, 7. The alignment of the rotatory shaft 3 in the housing 2 is maintained by at least one bearing 8 that surrounds the rotatory shaft 3 and supports its rotation. The at least one bearing 8 is disposed between the housing 2 and the rotary shaft 3 such that the outer race surface is in direct contact with the first radial surface 5; and the face of the bearing 8 is adjacent but typically offset from the first axial surface 6 by a gap G1.

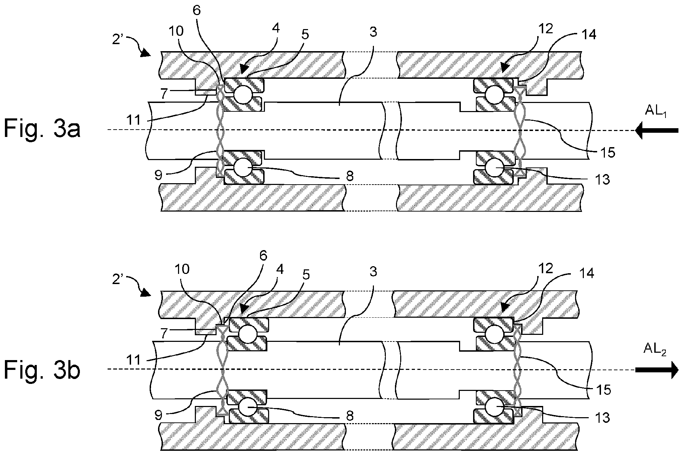

The gap G1 between the first axial surface 6 and the bearing 8 can be sized to account for thermal expansion of the housing 2 components such that changes in temperature, due to the functioning of the vehicle engine or environmental conditions, do not affect a normal smooth rotation of the shaft 3 within the housing 2. The gap G1 allows the bearing 8 to shift axially in the case that the rotatory shaft 3 shifts axially according to axial loads, as shown in Figure 3a and 3b. The gap G1 also allows for a specific small shifting of the bearing 8 (but stopping any larger shift with axial surface 6) that diminishes the shear forces acting on the bearing 8, which protects the integrity of the bearing 8 and allows for an overall longer bearing life.

The gap G1 is about 4 mm, for example, in the range of 2 and 8 mm. A specific gap size can secure the bearing 8 within the bearing seat 4 while still accounting for environmental and loading conditions. Thus, the gap G1 range can depend on several factors, for example, the materials used and size of the housing 2 components and the expected axial loads.

A resilient member 9 can be a circular component that surrounds the rotatory shaft 3 and is located in the radial space formed between the second axial surface 7 and bearing 8. The maximum diameter of the resilient member 9 (D2) is about equal to the outer diameter of the second axial surface 7 and extends between second axial surface 7 and the inner diameter of the outer race of the bearing 8. The resilient member 9 acts to reduce the inner axial clearance within the bearing 8 by axially shifting the outer race relative to the inner race such that the contact between components of the bearing 8 is maximal, and in this manner helps to ensure best performance.

In some examples, the resilient member 9 can apply an axial pre-load on the bearing 8 in a second direction (AL₂). This axial pre-load helps to minimize the inner axial clearance of the bearing 8 when changes of axial load occur during driving. This can help to ensure a smooth rotation of the inner race of the bearing 8, which can assist in better performance, for example, reducing ball skidding, noise, and vibration. Accordingly, the stiffness and axial size of the resilient member 9 can be configured such that the bearing 8 stays loaded at every axial position allowed by the gap G1.

An example of resilient member 9 is a coil wave spring. A coil wave spring is able to consistently apply an axial pre-load on the bearing 8 and elastically tolerate deformation when the bearing 8 shifts axially according to the axial loads, for example, those coming from the rotatory shaft 3.

Some specific examples of bearings and wave springs for a vehicle which could be used to support the rotation of the rotatory shaft 3 and apply an appropriate axial pre-load on the bearing, respectively, include bearings and wave springs formed of metals, for example steel (including alloys) and may have the following dimensions (see Figure 2):

| Bearing diameter "D1" (mm) | Bearing width "W1" (mm) " () | Wave spring diameter "D2" (mm) | Wave spring uncompressed width (mm) | Wave spring working force (N) |
|---|---|---|---|---|
| 40 - 130 | 8 - 30 | 40 - 130 | 3 - 15 | 100 - 800 |

Figure 3a and 3b illustrate the behavior of housing 2 components according to a second example 2' with two bearing seats (4 and 12) and two bearings (8 and 13), in which the bearing seat 12 is mirrored from bearing seat 4. In this example, axial loads are applied on the shaft 3 in a first direction (AL₁ in Figure 3a) and a second direction (AL₂ in Figure 3b), respectively. The axial loads typically originate in the transmission system of the vehicle land can cause axial shifting of the shaft 3. Typically, these are slight shifts, but could be larger depending on the forces in the system. Depending on the driving mode and the direction of the vehicle 1, the shaft 3 may be provided with axial loads in a first direction or a second direction. For example, when the vehicle is driving forwards, the drive shaft is provided with a high axial load in the first direction. Conversely, when the vehicle 1 is driving backwards, the shaft 3 is provided with an axial load on the second direction. Changes in load may also occur when switching from driving mode to coasting mode, in which the axial load is provided in a second direction during coasting.

In Figure 3a an axial load in a first direction is provided to the rotatory shaft 3. The axial load originates a slight shifting of the rotatory shaft 3 in a first direction that is directly transmitted to the bearing 8 by the tight connection. The axial shifting of the bearing 8 and the rotatory shaft 3 is stopped by a reaction force applied by the first axial surface 6. As the bearing 8 is stopped from the contact between the outer race and first axial surface 6, the inner race and the rotatory shaft 3 are allowed to continue to rotate, thereby ensuring that the bearing 8 and shaft 3 are maintained in a suitable position and continue to function properly despite a high axial load. Furthermore, the inner axial clearance of the bearing 8 is minimized by the opposing forces within the bearing 8, the force in a first direction provided by the axial load on the inner race, and the reaction force in a second direction provided by first axial surface 6.

When an axial load is applied in a first direction, as shown in Figure 3a, the resilient member 9 is compressed to an amount corresponding to gap G1. The radial space formed between the second axial surface 7 and the bearing 8 also helps to protect resilient member 9 from being compressed to less than axial distance defined by the second radial surface 10. Therefore, the radial space also safeguards the integrity of the resilient member 9 despite high axial loads, which helps to maintain its function and lifespan, being able to reduce the bearing 8 inner clearance when no axial load is applied, or when an axial load is applied in a second direction.

To ensure a proper axial alignment of the bearing 13 during driving forward, the resilient member 15, for example a coil wave spring, applies an axial pre-load on the outer race of the bearing 13, which reduces the inner axial clearance. In this manner the resilient member 15 contributes to minimize noise and vibration of the bearing 13 and rotatory shaft 3.

In Figure 3b an axial load in a second direction is provided to the rotatory shaft 3. The axial load originates a slight shifting of the rotatory shaft 3 in a second direction that is directly transmitted to the bearing 8 and to second bearing 13 by the tight connection. The axial shifting of the bearings 8 and 13 and the rotatory shaft 3 is stopped by a reaction force applied by the first axial surface 14 of the second bearing seat 12.

In the case shown in Figure 3b, the resilient member 9, for example a coil wave spring, applies an axial pre-load on the outer race of the bearing 8, which ensures a proper axial alignment of the bearing 8 during driving, and reduces the inner axial clearance. In this manner the resilient member 9 contributes to minimized noise and vibration of the bearing 8 and rotatory shaft 3, for example, when the vehicle 1 is going backwards or when is set in coast mode.

In example 2', bearing seats 4 and 12 are functionally complementary to each other. When an axial load is applied in a first direction, bearing seat 4 stops axial shifting of the rotatory shaft 3 by a reaction force applied in a second direction. Subsequently, when an axial load is applied in a second direction, bearing seat 12 stops axial shifting of the rotatory shaft 3 by a reaction force applied in a first direction. In a similar manner, resilient member 15 ensures proper alignment of bearing 13 when an axial load is applied in a first direction, while resilient member 9 ensures a proper alignment of bearing 8 when an axial load is applied in a second direction.

While these specific examples are given, other bearings and wave springs could produce the desired results, and this application is not limited to the specific example dimensions given above. Additionally, while the housing have been shown and discussed in relation to a rotary shaft for a vehicle, such a housing could be useful with any type of rotating shaft subject to axial loads.

While the present disclosure has been described with reference to examples, it will be understood by those skilled in the art that various changes may be made, and equivalents may be substituted for elements thereof without departing from the scope of the disclosure. In addition, many modifications may be made to adapt a particular situation or material to the teachings of the present disclosure without departing from the essential scope thereof. Therefore, it is intended that the present disclosure is not limited to the particular examples disclosed, but that the present disclosure will include all examples falling within the scope of the appended claims.

## Claims

1. A housing (2) comprising:
at least one bearing seat (4) comprising:
a first radial surface (5) facing radially inward;
a first axial surface (6) connecting to the first radial surface (5) perpendicularly;
a second radial surface (10) connecting to the first axial surface (6) perpendicularly and extending parallel to the first radial surface (5) and;
a second axial surface (7) connecting to the second radial surface (10) perpendicularly and extending parallel to the first axial surface (6).

2. The housing (2) of claim 1, wherein the housing is made of a metal and/or metal alloy, preferably aluminum.

3. The housing (2) of any of the preceding claims, wherein the second axial surface (7) is axially offset in a first direction about 2 - 6 mm from the first axial surface (6).

4. The housing (2) of any of the preceding claims, wherein the radial distance of the second radial surface (10) from the first radial surface (5) is about equal to the distance of the third radial surface (11) from the second radial surface (10).

5. A system for a vehicle (1) comprising:
a rotary shaft (3);
the housing (2) according to any of the preceding claims; and
a bearing (8) disposed between the first radial surface (5) of the bearing seat (4) and the rotary shaft (3).

6. The system of claim 5, and further comprising a gap between the first axial surface (6) and the bearing (8) in a neutral position.

7. The system of claim 6, wherein the gap is in the range of 1 - 8 mm.

8. The system of claim 6, wherein the rotary shaft (3) is able to shift in a first and/or a second direction due to axial load.

9. The system of claim 8, wherein the axial load is up to 25kN.

10. The system of claim 8, wherein the bearing (8) is tightly connected to shaft (3) such that the bearing (8) shifts axially with the rotary shaft (3) according to the axial load.

11. The system of any of claims 6-10, wherein the bearing (8) is able to shift axially in the first direction such that the bearing (8) contacts the first axial surface (6) to stop shifting of the bearing (8) axially in the first direction.

12. The system of any of the preceding claims, and further comprising a resilient member (9), preferably a coil wave spring, axially disposed between the second axial surface (7) and the bearing (8).

13. The system of claim 12, wherein the resilient member (9) applies an axial pre-load on the bearing (8) in a second direction.

14. A method for minimizing noise and vibration in a vehicle comprising:
placing a bearing (8) between a housing (2) and a rotary shaft (3), the housing (2) comprising:
a first radial surface (5) facing radially inward;
a first axial surface (6) connecting to the first radial surface (5) perpendicularly;
a second radial surface (10) connecting to the first axial surface (6) perpendicularly and extending parallel to the first radial surface (5) and;
a second axial surface (7) connecting to the second radial surface (10)
perpendicularly and extending parallel to the first axial surface (6); and
stopping axial shifting of the bearing (8) in a first direction with the first axial surface (6).

15. The method of claim 14, and further comprising:
placing a resilient member (9) between the second axial surface (7) and the bearing (8),
and preferably applying an axial pre-load on the bearing (8) in a second direction.
